# EUROPÄISCHE PATENTANMELDUNG

(11) **EP 0 858 832 A1**
(43) Veröffentlichungstag der Anmeldung: **19.08.1998**
(21) Anmeldenummer: 98101921.9
(22) Anmeldetag: 04.02.1998
(51) Int. Cl.: B01J 20/34, C02F 1/20

(54) **Verfahren zur Entfernung von Stoffen aus einem Medium durch Desorption**

(30) Priorität: 13.02.1997 DE 19705504
(71) Anmelder: Linde Aktiengesellschaft, 65189 Wiesbaden (DE)
(72) Erfinder: Rebhan, Dieter, 82538 Geretsried-Gelting (DE)
(74) Vertreter: Kasseckert, Rainer

(57) **Zusammenfassung**

Es wird ein Verfahren zur Entfernung von Stoffen aus einem Medium durch Desorption der Stoffe mittels eines Trägergases und anschließendes Auskondensieren und/oder Ausfrieren der desorbierten Stoffe aus dem beladenen Trägergas beschrieben. Um eine möglichst wirtschaftliche Verfahrensweise zu ermöglichen, wird vorgeschlagen, die desorbierten Stoffe (5) durch Wärmekontakt (6) mit einem tiefkalt verflüssigten Gas aus dem Trägergas auszukondensieren und/oder auszugefrieren, wobei das tiefkalt verflüssigte Gas (7) verdampft, und das verdampfte Gas (3) als Trägergas zur Desorption (2) der Stoffe aus dem Medium einzusetzen.

## Beschreibung

Die Erfindung betrifft ein Verfahren zur Entfernung von Stoffen aus einem Medium durch Desorption der Stoffe mittels eines Trägergases und anschließendes Auskondensieren und/oder Ausfrieren der desorbierten Stoffe aus dem beladenen Trägergas.

In der Venfahrenstechnik haben sich zur Entfernung von Stoffen aus insbesondere wäßrigen Medien Methoden zur Desorption der Stoffe mittels eines Trägergases etabliert. Beispielsweise werden Lösungsmittel aus Industrieabwässer häufig mit Heißdampf ausgestrippt. Die desorbierten Stoffe werden anschließend durch indirekten Wärmeaustausch mit einem Kühlmittel in einem Kondensator aus dem beladenen Trägergas auskondensiert und/oder ausgefroren. Derartige Verfahren werden auch zur Entfernung von Stoffen aus Gasströmen eingesetzt. Dabei wird der Gasstrom bspw. über einen Aktivkohlefilter geleitet, der im Gegenstrom vom Trägergas durchströmt wird. Der Trägergasstrom nimmt die Stoffe aus dem Gasstrom auf und wird einem Kondensator zugeführt. Dort werden die desorbierten Stoffe vom beladenen Trägergasstrom durch Auskondensieren und/oder Ausfrieren abgetrennt.

Aus der DE 33 16 062 A1 ist ein Verfahren zur Entfernung von Lösungsmittel aus Abwässern bekannt, bei dem das lösungsmittelhaltige Abwasser in einer Strippkolonne mit Wasserdampf beaufschlagt wird. Dabei wird das Lösungsmittel aus dem Abwasser ausgestrippt und das Dampf-Lösungsmittel-Gemisch einem Kondensator zugeführt. Im Kondensator wird das Dampf-Lösungsmittel-Gemisch in indirekten Wärmeaustausch mit einem Kühlmittel gebracht. Das Lösungsmittel kondensiert so aus dem Dampf-Lösungsmittel-Gemisch aus und kann einer weiteren Aufbereitung zugeführt werden.

Derartige Verfahren sind technisch sehr aufwendig, da sie getrennte Kreisläufe für das Trägergas und das Kältemittel aufweisen. Der Trägergaskreislauf benötigt außerdem einen Verdampfer zur Erzeugung von heißem Wasserdampf. Andererseits muß für den Kühlkreislauf eine Kältemaschine vorgesehen werden.

Der Erfindung liegt die Aufgabe zugrunde, ein Verfahren der eingangs genannten Art so auszugestalten, daß auf wirtschaftliche Weise und ohne großen technischen Aufwand eine weitgehende Entfernung der Stoffe aus dem Medium erreicht wird.

Diese Aufgabe wird erfindungsgemäß dadurch gelöst, daß die desorbierten Stoffe durch Wärmekontakt mit einem tiefkalt verflüssigten Gas aus dem Trägergas auskondensiert und/oder ausgefroren werden, wobei das tiefkalt verflüssigte Gas verdampft, und das verdampfte Gas als Trägergas zur Desorption der Stoffe aus dem Medium eingesetzt wird.

Die Erfindung besteht also aus einer sinnvollen Kombination von Desorption und Kondensation unter Verwendung eines tiefkalt verflüssigten Gases. Der Kälteinhalt des tiefkalt verflüssigten Gases wird zur Kondensation genutzt und zwar zeitgleich oder nahezu zeitgleich mit der Desorption der Stoffe aus dem Medium. Dadurch ergänzen sich die Massen- und Energieströme ideal. Sollen bspw. Stoffe aus Flüssigkeiten ausgestrippt werden, so wird eine bestimmte Trägergasmenge durch die zu strippende Flüssigkeit geleitet. Diese Gasmenge muß nahezu zeitgleich aus der Flüssigphase verdampft werden. Die dazu benötigte Verdampfungswärme entspricht etwa 50 % der gesamten verfügbaren Enthalpie und kann zur Abkühlung bzw. Kondensation des beladenen Trägergasstromes genutzt werden, um die ausgestrippten Stoffe rückzugewinnen. Diese Verfahrensweise ist ideal, da mit der Verdampfungswärme annähernd diejenige Energie verfügbar ist, die notwendig ist, um den Gasstrom in die Nähe der Verflüssigungstemperatur des tiefkalt verflüssigten Gases abzukühlen.

Als besonders vorteilhaft erweist sich der Einsatz von flüssigem Stickstoff als tiefkalt verflüssigtes Gas zur gleichzeitigen Desorption und Kondensation.

Mit dem erfindungsgemäßen Verfahren können Stoffe aus den unterschiedlichsten Medien entfernt werden. Beispielsweise lassen sich die Stoffe aus Flüssigkeiten, Gasen oder Schüttungen von Feststoffteilchen austreiben. Insbesondere ist das Verfahren z. B. zur Desorption von gasförmigen oder flüchtigen Stoffen aus Aktivkohleschüttungen geeignet.

Besonders gut eignet sich das Verfahren zur Entfernung von flüchtigen Stoffen, z. B. flüchtigen organischen Kohlenwasserstoffverbindungen, aus Flüssigkeiten. Auf diese Weise können z. B. flüchtige organische Kohlenwasserstoffverbindungen aus lösungsmittelhaltigen Abwässern rückgewonnen werden. Mit Vorteil wird das Verfahren zur Aufbereitung von Abwässern verwendet, die in der chemischen und/oder petrochemischen Industrie anfallen.

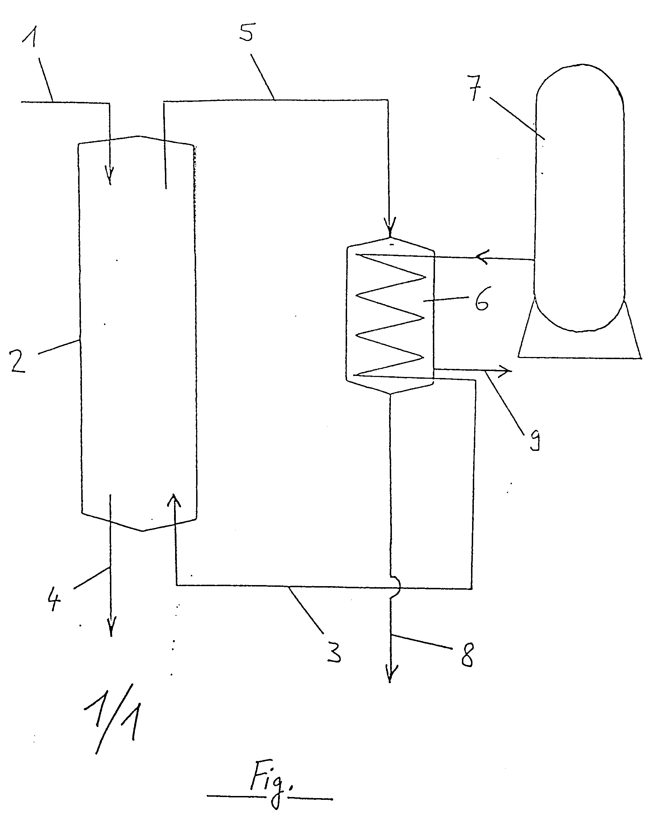

Im folgenden wird die Erfindung anhand eines in der Figur schematisch dargestellten Ausführungsbeispiel näher erläutert.

Zu behandelndes Abwasser, z. B. aus der chemischen oder petrochemischen Industrie wird über Leitung 1 in den Kopfbereich einer Strippkolonne 2 eingeleitet. In der Strippkolonne 2 wird das Abwasser im Gegenstrom zu gasförmigem Stickstoff, der über Leitung 3 am Boden der Strippkolonne 2 eingeleitet wird, geführt. Gereinigtes Abwasser verläßt über Leitung 4 die Strippkolonne und kann abgezogen werden. In der Strippkolonne 2 werden flüchtige organische Kohlenwasserstoffverbindungen aus dem Abwasser ausgestrippt, wobei der als Trägergas eingesetzte gasförmige Stickstoff mit den flüchtigen organischen Kohlenwasserstoffverbindungen beladen wird. Das beladene Trägergas verläßt die Strippkolonne 2 am Kopf über Leitung 5 und wird einem Kondensator 6 zugeführt. Im Kondensator 6 wird der beladene Trägergasstrom in indirekten Wärmeaustausch mit flüssigem Stickstoff aus einem Flüssig-Stickstofftank 7 gebracht. Dabei kondensieren die flüchtigen organischen Kohlenwasserstoffverbindungen aus dem Trägergasstrom aus und können im flüssigen Zustand über Leitung 8 vom Kondensator abgezogen werden. Das zurückbleibende Trägergas, also der gasförmige Stickstoff, wird über Leitung 9 an die Atmosphäre abgegeben.

Bei diesem Verfahren werden also der Kälteinhalt des flüssigen Stickstoffs zur Kondensation der flüchtigen organischen Kohlenwasserstoffverbindungen aus dem beladenen Trägergas und der dabei verdampfte Stickstoff zum Ausstrippen der flüchtigen organischen Kohlenwasserstoffverbindungen aus dem Abwasser, also als Trägergas, eingesetzt.

## Patentansprüche

1. Verfahren zur Entfernung von Stoffen aus einem Medium durch Desorption der Stoffe mittels eines Trägergases und anschließendes Auskondensieren und/oder Ausfrieren der desorbierten Stoffe aus dem beladenen Trägergas, dadurch gekennzeichnet, daß die desorbierten Stoffe durch Wärmekontakt mit einem tiefkalt verflüssigten Gas aus dem Trägergas auskondensiert und/oder ausgefroren werden, wobei das tiefkalt verflüssigte Gas verdampft, und das verdampfte Gas als Trägergas zur Desorption der Stoffe aus dem Medium eingesetzt wird.

2. Verfahren nach Anspruch 1, dadurch gekennzeichnet, daß als tiefkalt verflüssigtes Gas flüssiger Stickstoff verwendet wird.

3. Verfahren nach Anspruch 1 oder 2, dadurch gekennzeichnet, daß als Medium eine Schüttung aus Feststoffteilchen, insbesondere eine Aktivkohleschüttung, verwendet wird.

4. Verfahren nach Anspruch 1 oder 2, dadurch gekennzeichnet, daß als Medium eine Flüssigkeit verwendet wird.

5. Verfahren nach Anspruch 4, dadurch gekennzeichnet, daß als Flüssigkeit Abwasser, insbesondere lndustrieabwasser aus chemischen und/oder petrochemischen Verarbeitungsschritten, verwendet wird.

6. Verfahren nach Anspruch 4 oder 5, dadurch gekennzeichnet, daß flüchtige organische Kohlenwasserstoffe aus der Flüssigkeit ausgestrippt werden.
